# EUROPEAN PATENT APPLICATION

(11) **EP 4 603 325 A1**
(43) Date of publication of application: **20.08.2025**
(21) Application number: 22962346.7
(22) Date of filing: 19.10.2022
(51) Int. Cl.: B60L 58/27, H01M 10/615

(54) **BATTERY SELF-HEATING SYSTEM, ELECTRICAL DEVICE, AND VEHICLE**

(71) Applicant: Contemporary Amperex Technology Co., Limited, Ningde, Fujian 352100 (CN); Contemporary Amperex Intelligence Technology (Shanghai) Limited, Shanghai 201306 (CN)
(72) Inventor: LI, Pengtao, Shanghai 200120 (CN); ZHUANG, Zhaohui, Shanghai 200120 (CN); MA, Guolong, Shanghai 200120 (CN); PENG, Long, Shanghai 200120 (CN)
(74) Representative: Gong, Jinping
(86) International application number: PCT/CN2022/126048
(87) International publication number: WO 2024/082155

(57) **Abstract**

Disclosed in the present application are a battery self-heating system, an electrical device, and a vehicle. The battery self-heating system comprises a first battery, a second battery, a converter, a motor, a first switch device and a second switch device, the first battery and the second battery being connected through the first switch device, a negative electrode of the first battery and a negative electrode of the second battery being both connected to a first terminal of the converter, and the second switch device being arranged between the negative electrode of the first battery and the first terminal of the converter. One of a positive electrode of the first battery and a positive electrode of the second battery is connected to the motor, and the other one is connected to a second terminal of the converter. Thus, by means of controlling the motor and the converter, the first battery and the second battery can be alternately charged and discharged, and further self-heating of the first battery and the second battery can be performed by using oscillating current generated by alternate charging and discharging, so that compared with external heating, the present application can effectively raise heating efficiency, and does not need addition of an extra heating apparatus, thus achieving lower costs.

## Description

### TECHNICAL FIELD

The present application relates to the technical field of battery thermal management, and more specifically relates to a battery self-heating system, an electrical device, and a vehicle.

### BACKGROUND

With the development of battery technologies and the advent of the electrification era, batteries are usually used as power sources together with motor drive circuits in electric devices, wherein an electrical apparatus includes, e.g., a battery cart and an electrical vehicle.

Since a maximum allowable output power of a battery is associated with temperature, the battery generally fails to output a high power under a low-temperature condition, thereby resulting in battery performance degradation.

In order to solve the problem of battery performance degradation caused by a low temperature, external heating is generally used by additionally providing a special electrical heating system in the electrical apparatus to heat the battery, but this method has the problems of high costs and low heating efficiency.

### SUMMARY OF THE INVENTION

The present application provides a battery self-heating system, an electrical device, and a vehicle, which can self-heat a battery without the need to provide an external heating apparatus, thereby reducing costs and improving heating efficiency.

In a first aspect, a battery self-heating system is provided, comprising:
a first battery, a second battery, a converter, a motor, a first switch device, and a second switch device;
a negative electrode of the first battery being connected to a positive electrode of the second battery through the first switch device; the negative electrode of the first battery being further connected to a first terminal of the converter through the second switch device;
a negative electrode of the second battery being connected to the first terminal of the converter;
one of a positive electrode of the first battery and the positive electrode of the second battery being connected to the motor, and the other one being connected to a second terminal of the converter.

With technical solutions in embodiments of the present application, a battery self-heating system is provided. A first battery and a second battery are connected to a motor and a converter respectively, so that the motor and the converter are controlled to alternately charge and discharge the first battery and the second battery, and then the first battery and the second battery can be self-heated using an oscillating current generated by the alternate charging and discharging, thereby effectively improving the heating efficiency at lower costs without the need to additionally provide an additional heating device, compared with external heating.

As a possible implementation, one of the positive electrode of the first battery and the positive electrode of the second battery being connected to the motor, and the other one being connected to the second terminal of the converter comprises:
the positive electrode of the second battery being connected to the motor through a third switch device; and
the positive electrode of the first battery being connected to the second terminal of the converter.

With the technical solutions of this implementation, the first switch device is switched off and the second switch device and the third switch device are switched on, so that the first battery, the second battery, the converter, and the motor can form a closed loop, and so that, by controlling the converter, the first battery and the second battery can be alternately charged and discharged, thereby realizing self-heating.

As a possible implementation, the positive electrode of the second battery being connected to the motor through the third switch device comprises:

the positive electrode of the second battery being connected to a neutral point of a stator or any one phase of the motor through the third switch device.

With the technical solutions of this implementation, with the connection mode of leading out the neutral point of the motor to the positive electrode of the second battery, when the first battery and the second battery are self-heated, the direction and magnitude of the current in each phase of the three-phase circuit are consistent, that is, a vector sum of three-phase currents of the motor is 0, thereby preventing the oscillating current from generating a large torque on the motor, and avoiding the generation of large noise. Further, the positive electrode of the second battery is connected to any one phase of the motor, so that the battery can be self-heated without the need to lead out the neutral point of the stator of the motor.

As a possible implementation, one of the positive electrode of the first battery and the positive electrode of the second battery being connected to the motor, and the other one being connected to the second terminal of the converter comprises:
the positive electrode of the first battery being connected to the motor through a fourth switch device; and
the positive electrode of the second battery being connected to the second terminal of the converter through a sixth switch device.

With the technical solutions of this implementation, the first switch device is switched off, and the second switch device, the fourth switch device, and the sixth switch device are switched on, so that the first battery, the second battery, the converter, and the motor can form a closed loop, and so that, by controlling the converter, the first battery and the second battery can be alternately charged and discharged, thereby generating an oscillating current, and heating the first battery and the second battery through the oscillating current.

As a possible implementation, the battery self-heating system further comprises: a fifth switch device; and
the positive electrode of the first battery is connected to the second terminal of the converter through the fifth switch device.

With the technical solutions of this implementation, the first switch device and the fifth switch device are switched on, and the second switch device, the fourth switch device, and the sixth switch device are switched off, so that the first battery and the second battery are combined in series to form a battery, and form a power supply circuit with the motor and the converter, and so that each of the first battery and the second battery can provide energy for the motor and the converter, thereby ensuring that the motor and the converter can obtain enough electrical energy.

As a possible implementation, the positive electrode of the first battery being connected to the motor through the fourth switch device comprises:
the positive electrode of the first battery being connected to a neutral point of a stator or any one phase of the motor through the fourth switch device.

With the technical solutions of this implementation, with the connection mode of leading out the neutral point of the motor to the positive electrode of the first battery, when the first battery and the second battery are self-heated, the direction and magnitude of the current in each phase of the three-phase circuit are consistent, that is, the vector sum of the three-phase currents of the motor is 0, thereby preventing the oscillating current from generating a large torque on the motor, and avoiding the generation of large noise. Further, the positive electrode of the first battery is connected to any one phase of the motor, so that the battery can be self-heated without the need to lead out the neutral point of the stator of the motor.

As a possible implementation, the battery self-heating system further comprises: a first capacitive branch circuit;
the first capacitive branch circuit comprises a seventh switch device and a first capacitor in series;
one terminal of the first capacitive branch circuit is connected to the negative electrode of the second battery, and the other terminal is connected to the positive electrode of the second battery.

With the technical solutions of this implementation, the first capacitor can be used to stabilize the voltage of the second battery, and the seventh switch device is arranged to reduce the thermal risk of the first capacitor.

As a possible implementation, the battery self-heating system further comprises: a second capacitive branch circuit;
the second capacitive branch circuit comprises an eighth switch device and a second capacitor in series;
one terminal of the second capacitive branch circuit is connected to the positive electrode of the first battery, and the other terminal is connected to the negative electrode of the second battery.

With the technical solutions of this implementation, the second capacitor can be used to stabilize the voltage of the first battery, and the eighth switch device is arranged to reduce the thermal risk of the second capacitor.

In a second aspect, an embodiment of the present application provides an electrical device, comprising the battery self-heating system according to the first aspect.

In a third aspect, an embodiment of the present application provides a vehicle, comprising the battery self-heating system according to the first aspect.

### DESCRIPTION OF DRAWINGS

In order to illustrate technical solutions of embodiments of the present application more clearly, drawings to be used in the embodiments of the present application are briefly introduced below. Obviously, the drawings described below are only some embodiments of the present application. For those of ordinary skills in the art, other drawings may also be obtained according to the drawings without creative work.
FIG. 1 is a schematic structural diagram of a battery self-heating system provided in an embodiment of the present application;
FIG. 2 is a schematic structural diagram of a motor drive circuit provided in an example embodiment of the present application;
FIG. 3 is a schematic diagram of a converter control logic when a second battery charges a first battery provided in an embodiment of the present application;
FIG. 4 is a schematic diagram of a converter control logic when a first battery charges a second battery provided in an embodiment of the present application;
FIG. 5 is a schematic diagram of a control logic when a first battery and a second battery charge each other provided in an embodiment of the present application;
FIG. 6 is a schematic structural diagram of a battery self-heating system provided in an example embodiment of the present application;
FIG. 7 is a schematic structural diagram of a battery self-heating system provided in another example embodiment of the present application;
FIG. 8 is a schematic structural diagram of a battery self-heating system provided in still another example embodiment of the present application;
FIG. 9 is a schematic structural diagram of a battery self-heating system provided in still another example embodiment of the present application;
FIG. 10 is a schematic structural diagram of a battery self-heating system provided in still another example embodiment of the present application;
FIG. 11 is a schematic structural diagram of a battery self-heating system provided in still another example embodiment of the present application;
FIG. 12 is a schematic structural diagram of a battery self-heating system provided in still another example embodiment of the present application; and
FIG. 13 is a schematic structural diagram of a battery self-heating system provided in still another example embodiment of the present application.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of drawings are intended to cover non-exclusive inclusions. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

The phrase "plurality of" in the present application means more than two (including two).

At present, batteries are generally used as power sources in various electrical devices provided with motor drive circuits, such as a battery cart, an electrical toy, an electrical tool, an electrical vehicle, a ship, and a spacecraft, wherein the spacecraft comprises, e.g., a plane, a rocket, a space shuttle, and a spaceship. A motor drive circuit mainly comprises a converter and a motor.

In order to improve the battery self-heating efficiency, an embodiment of the present application provides a battery self-heating system. The battery self-heating system provided in an embodiment of the present application may be applied to various electrical devices.

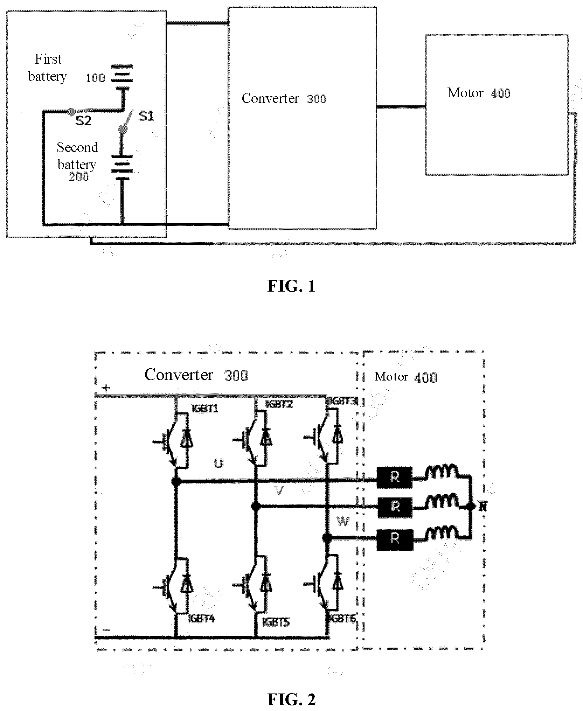

Referring to FIG. 1, a schematic structural diagram of a battery self-heating system provided in an embodiment of the present application is shown. As shown in FIG. 1, the battery self-heating system may comprise:
a first battery 100, a second battery 200, a converter 300, a motor 400, a first switch device S1, and a second switch device S2.

The converter 300 may be a power converter, such as a rectifier, an inverter, a lopper, or an AC-AC converter, and the motor 400 may be a drive motor, such as a three-phase motor or a single-phase motor.

A negative electrode of the first battery 100 is connected to a positive electrode of the second battery 200 through the first switch device S1.

The negative electrode of the first battery 100 is further connected to a first terminal of the converter 300 through the second switch device S2.

A negative electrode of the second battery is connected to the first terminal of the converter 300.

One of a positive electrode of the first battery 100 and the positive electrode of the second battery 200 is connected to the motor 400, and the other one is connected to a second terminal of the converter 300.

Based on the above battery self-heating system, during actual use, when self-heating function of the battery self-heating system is in an on-state, that is, when the first battery 100 and the second battery 200 are self-heated, the first switch device S1 can be switched off, and the second switch device S2 can be switched on, so that the first battery 100, the second battery 200, the converter 300, and the motor 400 form a closed loop. In this case, the converter 300 can be controlled to alternately charge and discharge the first battery 100 and the second battery 200, thereby generating an oscillating current. The oscillating current generated by the alternate charge and discharge can be used to heat the first battery 100 and the second battery 200, thereby self-heating the battery. The converter 300 may be controlled manually, or may be controlled by a controller.

In the battery self-heating system provided in this embodiment, the first battery and the second battery are connected to the motor and the converter respectively, so that the controller can be used to alternately charge and discharge the first battery and the second battery, and then the first battery and the second battery can be self-heated using the oscillating current generated by the alternate charging and discharging, thereby effectively improving the heating efficiency at lower costs without the need to additionally provide an additional heating device, compared with external heating.

In addition, the prior art provides a mode of battery heating by controlling the converter in a motor drive circuit to alternately charge and discharge a battery and a capacitor, but this mode fails to generate a large current due to high thermal risk of the capacitor, so that the heating efficiency remains low. Compared with the prior art, the battery self-heating system provided in this embodiment can achieve the battery self-heating without charging and discharging the capacitor, thereby solving the problem of low heating efficiency caused by the thermal risk of the capacitor.

Further, in this embodiment, a second switch device is further provided between the negative electrode of the first battery and a negative electrode of the converter, and the second switch device can be used to avoid the problem of short circuit of the second battery when the first switch device is switched on.

Referring to FIG. 2, a schematic structural diagram of a motor drive circuit comprising a converter 300 and a motor 400 provided in an example embodiment of the present application is shown. As shown in FIG. 2:

the converter 300 is a bridge arm inverter, comprising three bridge arms, wherein the first bridge arm is composed of a first power module IGBT1 and a fourth power module IGBT4, wherein an emitting electrode of the IGBT1 is connected to a collector of the IGBT4; a second bridge arm is composed of the second power module IGBT2 and a fifth power module IGBT5, wherein an emitting electrode of the IGBT2 is connected to a collector of the IGBT5; and the third bridge arm is composed of a third power module IGBT3 and a sixth power module IGBT6, wherein an emitting electrode of the IGBT3 is connected to a collector of the IGBT6. Collectors of the IGBT1, the IGBT2, and the IGBT3 serve as a positive electrode of the converter 300, and emitting electrodes of the IGBT4, the IGBT5, and the IGBT6 serve as a negative electrode of the converter 300.

The IGBT is an Insulated Gate Bipolar Transistor.

It should be noted that the power module IGBT in the converter 300 provided in this embodiment can be replaced with a Metal-Oxide-Semiconductor Field-Effect Transistor (MOSFET).

The motor 400 is a three-phase motor, comprising a star-connected three-phase stator winding, and the three-phase stator winding comprises U-, V-, and W-phase windings, wherein each phase winding comprises a resistor R and an inductor. For each phase winding, the resistor R is connected in series with the inductor, and one terminal of the resistor unconnected to the inductor is connected to a midpoint of a bridge arm in the converter 300, and a terminal of the inductor unconnected to the resistor R is connected to a neutral point N of a stator of the motor. It should be noted that the resistors R in different windings are connected to different bridge arms.

It should be understood that in an embodiment of the present application, the structure of the converter 300 and the motor 400 is not only limited to the structure as shown in FIG. 2, but may be other structures. However, for ease of description, the structure shown in FIG. 2 is taken as an example in all embodiments below.

In some embodiments, when the converter 300 is controlled to generate an oscillating current between the first battery 100 and the second battery 200, the second battery 200 may be first controlled to charge the first battery 100. After voltage of the first battery 100 is higher than voltage of the second battery 200, the first battery 100 is controlled to charge the second battery 200. In this way, the first battery 100 and the second battery 200 are repeatedly charged and discharged at a certain frequency (such as frequency f₀), so that an oscillating current at a frequency of f₀ is formed between the first battery 100 and the second battery 200. When the oscillating current flows through the first battery 100 and the second battery 200, a heating effect will be generated.

In this way, the first battery and the second battery can still be self-heated when an initial voltage of the first battery is lower than an initial voltage of the second battery.

With reference to the structure shown in FIG. 2, the control logic when the second battery 200 charges the first battery 100, the control logic when the first battery 100 charges the second battery 200, and the control logic when the first battery 100 and the second battery 200 charge each other are described below respectively.

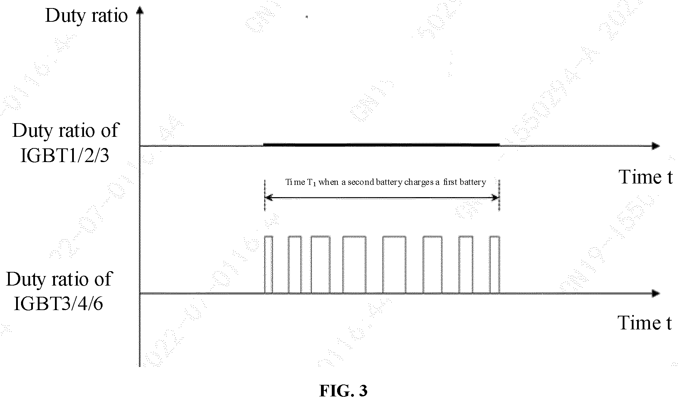

Referring to FIG. 3, a schematic diagram of the control logic of the converter 300 when the second battery 200 charges the first battery 100 is shown. As shown in FIG. 3, the control logic when the second battery 200 charges the first battery 100 may include: the upper bridge arms IGBT1, IGBT2, and IGBT3 of the converter 300 are controlled to be switched off at 0% duty ratio, and a certain duty ratio is calculated with currents of the three phases U, V, and W as to-be-controlled target quantities to simultaneously control the lower bridge arms IGBT4, IGBT5, and IGBT6 of the converter 300, so that the second battery charges the first battery.

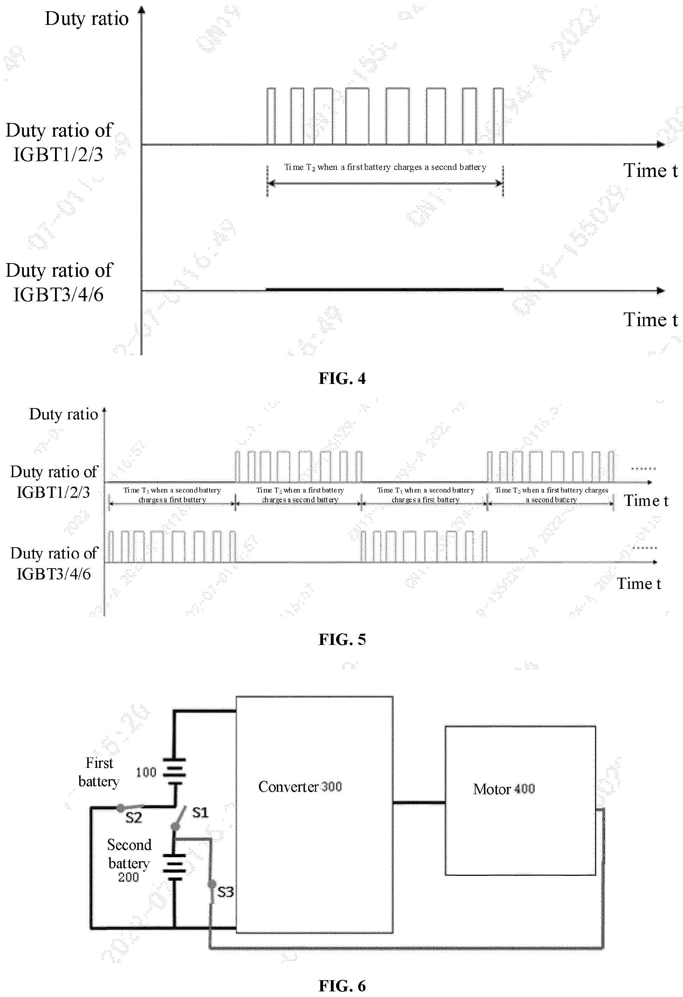

Referring to FIG. 4, a schematic diagram of the control logic of the converter 300 when the first battery 100 charges the second battery 200 is shown. As shown in FIG. 4, the control logic when the first battery 100 charges the second battery 200 may include: the upper bridge arms IGBT4, IGBT5, and IGBT6 of the converter 300 are controlled to be switched off at 0% duty ratio, and a certain duty ratio is calculated with currents of the three phases U, V, and W as to-be-controlled target quantities to simultaneously control the bridge arms IGBT1, IGBT2, and IGBT3 of the converter 300, so that the first battery 100 charges the second battery 200.

Referring to FIG. 5, a schematic diagram of the control logic of the converter 300 when the first battery 100 and the second battery 200 charge each other is shown.

A connection relationship between devices in the battery self-heating system is described in more detail below.

Referring to FIG. 6, a schematic structural diagram of a battery self-heating system provided in an example embodiment of the present application is shown. As shown in FIG. 6, the battery self-heating system provided in the embodiment of the present application may comprise:
a first battery 100, a second battery 200, a converter 300, a motor 400, a first switch device S1, a second switch device S2, and a third switch device S3.

A negative electrode of the first battery 100 is connected to a positive electrode of the second battery 200 through the first switch device S1.

The negative electrode of the first battery 100 is further connected to a first terminal of the converter 300 through the second switch device S2.

A positive electrode of the first battery 100 is connected to a second terminal of the converter 300.

A negative electrode of the second battery 200 is connected to the first terminal of the converter 300.

A positive electrode of the second battery 200 is further connected to the motor 400 through the third switch device S3.

When input terminals of the converter 300 are distinguished between positive and negative electrodes, for example, when the converter 300 is an inverter (such as the bridge arm inverter shown in FIG. 2), the first terminal of the converter 300 refers to a negative electrode input terminal, and the second terminal of the converter 300 refers to a positive electrode input terminal, thereby ensuring that the positive electrodes of the first battery 100 and the second battery 100 can be connected to the positive electrode input terminal of the converter 300, and contributing to power supply. When the input terminals of the converter 300 are not distinguished between positive and negative electrodes, the first terminal of the converter 300 may be any one input terminal, and the second terminal is the other input terminal except for the first terminal.

With the battery self-heating system provided in this embodiment, during actual use, the first switch device S1 may be switched off, and the second switch device S2 and the third switch device S3 may be switched on, so that the first battery 100, the second battery 200, the converter 300, and the motor 400 can form a closed loop. In this case, by controlling a power module in the converter 300 at a certain duty ratio, the first battery 100 and the second battery 200 can be alternately charged and discharged, thereby generating an oscillating current, and then heating the first battery 100 and the second battery 200 through the oscillating current.

In addition, when self-heating function of the battery self-heating system is in an off-state, the first switch device S1 is switched on, and the second switch device S2 and the third switch device S3 are switched off, so that the first battery 100 and the second battery 200 are combined in series to form a battery, and form a power supply circuit with the motor 400 and the converter 300, and so that each of the first battery 100 and the second battery 200 can provide energy for the motor 400 and the converter 300, thereby ensuring that the motor 400 and the converter 300 can obtain enough electrical energy.

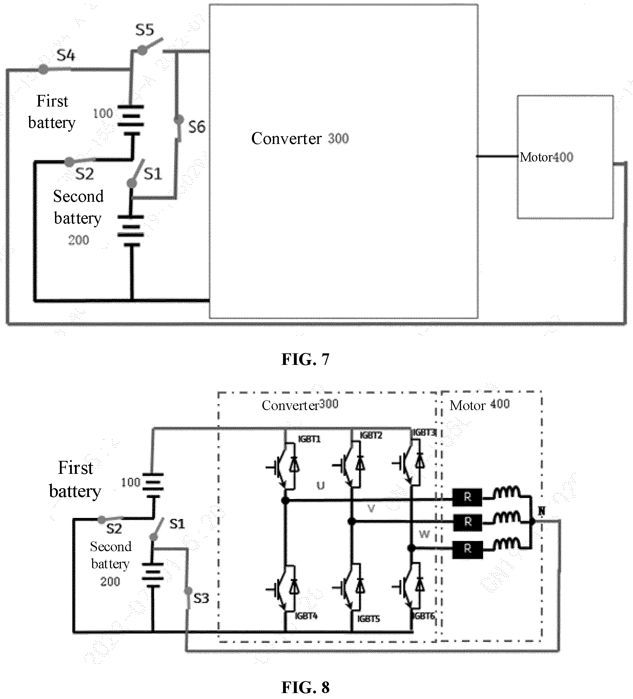

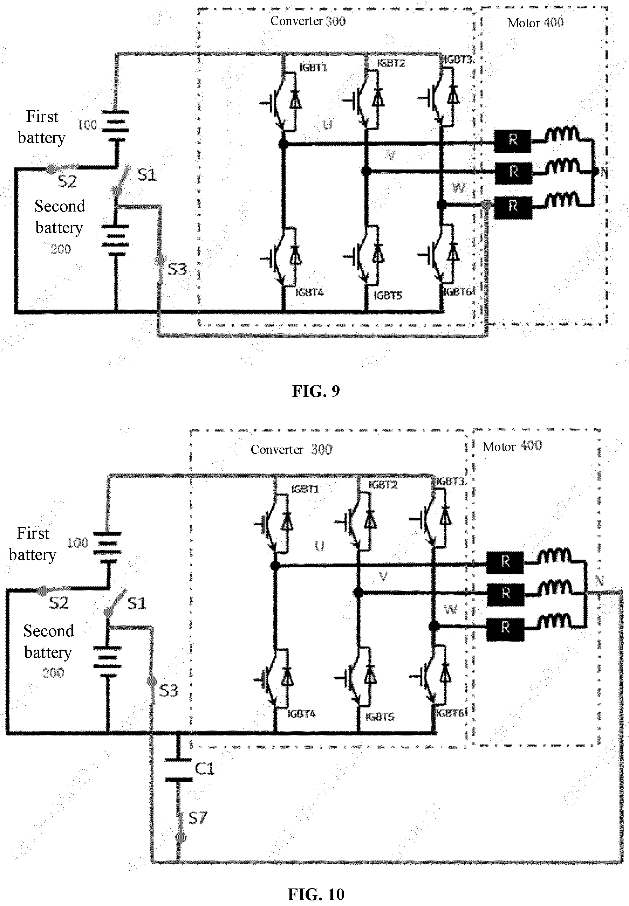

Referring to FIG. 7, a schematic structural diagram of another battery self-heating system provided in an embodiment of the present application is shown. As shown in FIG. 10, the battery self-heating system provided in the embodiment of the present application may comprise:
a first battery 100, a second battery 200, a converter 300, a motor 400, a first switch device S1, a second switch device S2, a fourth switch device S4, and a sixth switch device S6.

A negative electrode of the first battery 100 is connected to a positive electrode of the second battery 200 through the first switch device S1.

The negative electrode of the first battery 100 is further connected to a first terminal of the converter 300 through the second switch device S2.

A positive electrode of the first battery 100 is connected to the motor 400 through the fourth switch device S4.

A negative electrode of the second battery 200 is connected to the first terminal of the converter 300.

A positive electrode of the second battery 200 is further connected to a second terminal of the converter 300 through the sixth switch device S6.

When input terminals of the converter 300 are distinguished between positive and negative electrodes, for example, when the converter 300 is an inverter (such as the bridge arm inverter shown in FIG. 2), the first terminal of the converter 300 refers to a negative electrode input terminal, and the second terminal of the converter 300 refers to a positive electrode input terminal, thereby ensuring that the positive electrodes of the first battery 100 and the second battery 100 can be connected to the positive electrode input terminal of the converter 300, and contributing to power supply. When the input terminals of the converter 300 are not distinguished between positive and negative electrodes, the first terminal of the converter 300 may be any one input terminal, and the second terminal is the other input terminal except for the first terminal.

With the battery self-heating system provided in this embodiment, during actual use, self-heating function of the battery self-heating system is in an on-state, the first switch device S1 is switched off, and the second switch device S2, the fourth switch device S4, and the sixth switch device S6 are switched on, so that the first battery 100, the second battery 200, the converter 300, and the motor 400 can form a closed loop. In this case, by controlling a power module in the converter 300 at a certain duty cycle, the first battery 100 and the second battery 200 can be alternately charged and discharged, thereby generating an oscillating current, and then heating the first battery 100 and the second battery 200 through the oscillating current.

Further, in order to ensure that when the self-heating function of the battery self-heating system is in an off-state, each of the first battery 100 and the second battery 200 can normally power the motor 400 and the converter 300. As shown in FIG. 7, the battery self-heating system may further comprise a fifth switch device S5, and the positive electrode of the first battery 100 is connected to the second terminal of the converter 300 through the fifth switch device S5. Thus, when the self-heating function of the battery self-heating system is in the off-state, the first switch device S1 and the fifth switch device S5 are switched on, and the second switch device S2, the fourth switch device S4, and the sixth switch device S6 are switched off, so that the first battery 100 and the second battery 200 are combined in series to form a battery, and form a power supply circuit with the motor 400 and the converter 300, and so that each of the first battery 100 and the second battery 200 can provide energy for the motor 400 and the converter 300, thereby ensuring that the motor 400 and the converter 300 can obtain enough electrical energy.

As another example embodiment of the present application, based on the battery self-heating system shown in FIG. 6, the positive electrode of the second battery 200 being connected to the motor 400 through the third switch device S3 may include:
the positive electrode of the first battery 200 being connected to a neutral point of a stator of the motor 400 through the third switch device S3.

For example, as shown in FIG. 8, on the basis that the battery self-heating system comprises the structure shown in FIG. 2, the positive electrode of the second battery 200 can be connected to the neutral point N of the stator in the motor 400 through the third switch device S3.

With the battery self-heating system provided in this embodiment, the neutral point of the motor is led out to the positive electrode of the second battery. Thus, when the first battery and the second battery are self-heated, the direction and magnitude of the current in each phase of the three-phase circuit are consistent, that is, a vector sum of three-phase currents of the motor is 0, thereby preventing the oscillating current from generating a large torque on the motor, and avoiding the generation of large noise.

As another example embodiment of the present application, based on the battery self-heating system shown in FIG. 6, the positive electrode of the second battery 200 being connected to the motor 400 through the third switch device S3 may include: the positive electrode of the second battery 200 being connected to any one phase of the motor 400 through the third switch device S3.

For example, as shown in FIG. 9, on the basis that the battery self-heating system comprises the motor drive circuit structure as shown in FIG. 2, the positive electrode of the second battery 200 is connected to W-phase winding through the third switch device S3 as an example, and the positive electrode of the second battery 200 is connected to a first terminal of a resistor R in the W-phase winding through the third switch device S3.

Based on this continuous mode, when the first battery 100 and the second battery 200 are self-heated, the IGBT3 and the IGBT6 in the converter 300 may be controlled to be in an off-state, then by controlling the IGBT1, the IGBT2, the IGBT4, and the IGBT5, the current outputted from the first battery is inputted into the U- and V-phase windings of the motor 400 through the IGBT1 and the IGBT2, then into the W-phase winding, and then into the second battery 200 through the S3. Similarly, the current outputted from the second battery 200 may also be inputted into the first battery 100 first through the S3, then through the W-phase winding, then through the U- and V-phase windings of the motor 400, and finally through the IGBT1 and the IGBT2. In this way, the first battery 100 and the second battery 200 can be alternately charged and discharged, thereby heating the first battery 100 and the second battery 200.

The battery self-heating system provided in this embodiment can heat the battery without the need to lead out the neutral point of the stator of the motor.

Similarly, as another example embodiment of the present application, based on the battery self-heating system shown in FIG. 7, the positive electrode of the first battery 100 being connected to the motor 400 through the fourth switch device S4 may include:
the positive electrode of the first battery 100 being connected to the neutral point of the stator of the motor 400 through the fourth switch device S4.

With the technical solutions of this implementation, the neutral point of the motor is led out to the positive electrode of the first battery, so that, when the first battery and the second battery are self-heated, the direction and magnitude of the current in each phase of the three-phase circuit are consistent, that is, the vector sum of the three-phase currents of the motor is 0, thereby preventing the oscillating current from generating a large torque on the motor, and avoiding the generation of large noise.

As an example embodiment of the present application, based on the battery self-heating system shown in FIG. 7, the positive electrode of the first battery 100 being connected to the motor 400 through the fourth switch device S4 may include:
the positive electrode of the first battery 100 being connected to any one phase of the motor 400 through the fourth switch device S4.

The battery self-heating system provided in this embodiment can heat the battery without the need to lead out the neutral point of the stator of the motor.

As another example embodiment of the present application, based on the battery self-heating system provided in any of the above embodiments, the battery self-heating system may further comprise: a first capacitive branch circuit.

The first capacitive branch circuit may comprise a seventh switch device S7 and a first capacitor C1 in series. One terminal of the first capacitive branch circuit is connected to the negative electrode of the second battery 200, and the other terminal is connected to the positive electrode of the second battery 200.

When the first capacitive branch circuit is additionally provided on the basis of the battery self-heating system shown in FIG. 6, one terminal of the first capacitive branch circuit may be connected to the negative electrode of the second battery 200, and the other terminal may be connected to the positive electrode of the second battery 200 through the third switch device S3. During connection, as shown in FIG. 10, one terminal of the first capacitor C1 unconnected to the seventh switch device S7 may connected to the negative electrode of the second battery 200, and one terminal of the seventh switch device S7 unconnected to the first capacitor C1 may be connected to the positive electrode of the second battery 200 through the third switch device S3.

In addition to the above connection mode, one terminal of the first capacitor C1 unconnected to the seventh switch device S7 may be connected to the positive electrode of the second battery 200 through the third switch device S3, and one terminal of the seventh switch device S7 unconnected to the first capacitor C1 may be connected to the negative electrode of the second battery 200, which is not specifically limited.

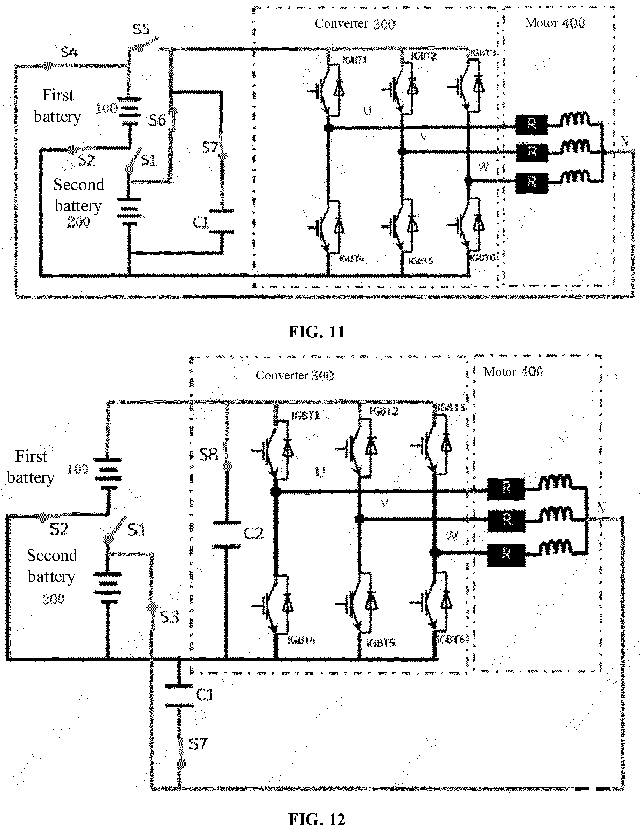

When the first capacitive branch circuit is additionally provided on the basis of the battery self-heating system shown in FIG. 7, one terminal of the first capacitive branch circuit may be connected to the negative electrode of the second battery 200, and the other terminal may be connected to the positive electrode of the second battery 200 through the sixth switch device S6. During connection, as shown in FIG. 11, one terminal of the first capacitor C1 unconnected to the seventh switch device S7 may be connected to the negative electrode of the second battery 200, and one terminal of the seventh switch device S7 unconnected to the first capacitor C1 may be connected to the positive electrode of the second battery 200 through the sixth switch device S6.

In addition to the above connection mode, one terminal of the first capacitor C1 unconnected to the seventh switch device S7 may be connected to the positive electrode of the second battery 200 through the sixth switch device S6, and one terminal of the seventh switch device S7 unconnected to the first capacitor C1 may be connected to the negative electrode of the second battery 200, which is not specifically limited.

Based on this structure, when the first battery 100 and the second battery 200 are self-heated, the first capacitor C1 can be used to stabilize the voltage of the second battery 200 by switching on the seventh switch device S7. During the self-heating, in case that temperature of the first capacitor C1 is higher than a preset first temperature threshold, the seventh switch device S7 may be switched off to reduce the thermal risk of the first capacitor C1. Further, when the temperature of the first capacitor C1 drops to a second temperature threshold, the seventh switch device S7 may be re-switched on to reconnect the first capacitor C1 and continue to stabilize the voltage. The first temperature threshold and the second temperature threshold may be set based on actual conditions, and the second temperature threshold is lower than or equal to the first temperature threshold.

With the battery self-heating system provided in this embodiment, the first capacitor can be used to stabilize the voltage of the second battery, and the sixth switch device is arranged to reduce the thermal risk of the first capacitor.

As another example embodiment of the present application, based on the battery self-heating system provided in any of the above embodiments, the battery self-heating system may further comprise: a second capacitive branch circuit. The second capacitive branch circuit may comprise an eighth switch device S8 and a second capacitor C2 in series. One terminal of the second capacitive branch circuit is connected to the positive electrode of the first battery 100, and the other terminal is connected to the negative electrode of the second battery 200.

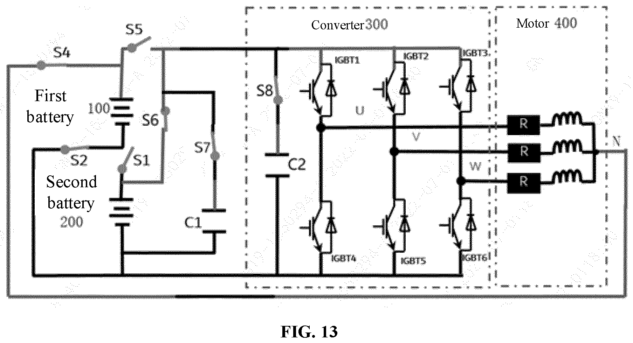

Referring to FIGS. 12 and 13, FIG. 12 is a schematic structural diagram of the battery self-heating system shown in FIG. 10 additionally provided with a second capacitive branch circuit, and FIG. 13 is a schematic structural diagram of the battery self-heating system shown in FIG. 11 additionally provided with a second capacitive branch circuit.

During connection, except for those as shown in FIGS. 12 and 13, namely, one terminal of the eighth switch device S8 unconnected to the second capacitor C2 is connected to the positive electrode of the first battery 100, and one terminal of the second capacitor C2 unconnected to the eighth switch device S8 is connected to the negative electrode of the second battery 200, one terminal of the eighth switch device S8 unconnected to the second capacitor C2 may be connected to the negative electrode of the second battery 100, and one terminal of the second capacitor C2 unconnected to the eighth switch device S8 may be connected to the positive electrode of the first battery 200, which is not specifically limited.

Based on this structure, when the first battery 100 and the second battery 200 are self-heated, the eighth switch device S8 may be switched on, and the second capacitor C2 can be used to stabilize the voltage of the first battery 100. During the self-heating, in case that temperature of the second capacitor C2 is higher than a preset third temperature threshold, the eighth switch device S8 may be switched off to reduce the thermal risk of the second capacitor C2. Further, when the temperature of the second capacitor C2 drops to a fourth temperature threshold, the eighth switch device S8 may be re-switched on to reconnect the second capacitor C2, thereby stabilizing the voltage. The third temperature threshold and the fourth temperature threshold may be set based on actual conditions, and the fourth temperature threshold is lower than or equal to the third temperature threshold.

With the battery self-heating system provided in this embodiment, the second capacitor can be used to stabilize the voltage, and the eighth switch device is arranged to reduce the thermal risk of the second capacitor.

As another example embodiment of the present application, based on any of the above embodiments, the battery self-heating system may further comprise: a controller.

The controller may be connected to the converter 300, and is configured to control the converter 300, to alternately charge and discharge the first battery 100 and the second battery 200.

Further, any switch device comprised in the battery self-heating system may also be connected to the controller, so that each switch device can be controlled by the controller to be switched off or switched on.

Any switch device may be an electronic switch, for example, a switch such as a relay, which changes on/off state of the circuit through electricity or an electrical signal.

The battery self-heating system provided in this embodiment can control, through the controller, the converter and/or the switch device by connecting the converter and/or the switch device to the controller without manual operation, thereby improving the intelligentization of the battery self-heating system, and making it more efficient.

Further, in any of the above embodiments of the present application, the connection between any devices may be implemented through wires, wherein the wires may be copper bus wires.

Another embodiment of the present application further provides an electrical device, comprising the battery self-heating system provided in any of the above embodiments.

Another embodiment of the present application further provides a vehicle, comprising the battery self-heating system provided in any of the above embodiments.

In a practical application, self-heating function of the battery self-heating system provided in the vehicle can be set to an off-state when the vehicle is driven to run, and the self-heating function of the battery self-heating system can be set to an on-state after the vehicle stops running in a low- temperature environment.

It should be noted that the embodiments in the present application and the features in the embodiments may be combined with each other in case of no conflict.

Finally, it should be noted that, the above embodiments are merely used for describing the technical solution of the present application, instead of limiting the present application; although the present application is described in detail with reference to the foregoing embodiments, persons of ordinary skill in the art should understand that they can still make modifications on the technical solution recorded in the above embodiments, or perform equivalent replacements on a part of technical features thereof; these modifications or replacements are not intended to make the essences of the corresponding technical solutions depart from the spirit and scope of the technical solutions of the embodiments of the present application.

## Claims

1. A battery self-heating system, comprising:
a first battery, a second battery, a converter, a motor, a first switch device, and a second switch device;
a negative electrode of the first battery being connected to a positive electrode of the second battery through the first switch device; the negative electrode of the first battery being further connected to a first terminal of the converter through the second switch device;
a negative electrode of the second battery being connected to the first terminal of the converter;
one of a positive electrode of the first battery and the positive electrode of the second battery being connected to the motor, and the other one being connected to a second terminal of the converter.

2. The battery self-heating system according to claim 1, wherein the one of the positive electrode of the first battery and the positive electrode of the second battery being connected to the motor, and the other one being connected to the second terminal of the converter comprises:
the positive electrode of the second battery being connected to the motor through a third switch device; and
the positive electrode of the first battery being connected to the second terminal of the converter.

3. The battery self-heating system according to claim 2, wherein the positive electrode of the second battery being connected to the motor through the third switch device comprises:
the positive electrode of the second battery being connected to a neutral point of a stator or any one phase of the motor through the third switch device.

4. The battery self-heating system according to claim 1, wherein the one of the positive electrode of the first battery and the positive electrode of the second battery being connected to the motor, and the other one being connected to the second terminal of the converter comprises:
the positive electrode of the first battery being connected to the motor through a fourth switch device; and
the positive electrode of the second battery being connected to the second terminal of the converter through a sixth switch device.

5. The battery self-heating system according to claim 4, wherein the battery self-heating system further comprises: a fifth switch device; and
the positive electrode of the first battery is connected to the second terminal of the converter through the fifth switch device.

6. The battery self-heating system according to claim 4, wherein the positive electrode of the first battery being connected to the motor through the fourth switch device comprises:
the positive electrode of the first battery being connected to a neutral point of a stator or any one phase of the motor through the fourth switch device.

7. The battery self-heating system according to any one of claims 1 to 6, wherein the battery self-heating system further comprises: a first capacitive branch circuit;
the first capacitive branch circuit comprises a seventh switch device and a first capacitor in series;
one terminal of the first capacitive branch circuit is connected to the negative electrode of the second battery, and the other terminal is connected to the positive electrode of the second battery.

8. The battery self-heating system according to any one of claims 1 to 7, wherein the battery self-heating system further comprises: a second capacitive branch circuit;
the second capacitive branch circuit comprises an eighth switch device and a second capacitor in series;
one terminal of the second capacitive branch circuit is connected to the positive electrode of the first battery, and the other terminal is connected to the negative electrode of the second battery.

9. An electrical device, comprising the battery self-heating system according to any one of claims 1 to 8.

10. A vehicle, comprising the battery self-heating system according to any one of claims 1 to 8.
